# FASCICULE DE BREVET EUROPEEN

(11) **EP 0 560 658 B1**
(45) Date de publication et mention de la délivrance du brevet: **04.09.1996**
(21) Numéro de dépôt: 93400578.6
(22) Date de dépôt: 05.03.1993
(51) Int. Cl.: G01S 13/78, G01S 13/44

(54) **Procédé et dispositif détection de mélanges d'impulsions reçues par un radar secondaire par analyse de phase**
Verfahren und Vorrichtung zur Erkennung von durch ein Sekundärradar mittels Phasenanalyse empfangenen vermischten Impulsen
Method and device for garble detection of an SSR via phase analysis

(30) Priorité: 10.03.1992 FR 9202844
(43) Date de publication de la demande: 15.09.1993
(73) Titulaire: THOMSON-CSF, 75008 Paris (FR)
(72) Inventeur: Billaud, Philippe, F-92402 Courbevoie Cedex (FR); de Volder, Claude, F-92402 Courbevoie Cedex (FR)
(74) Mandataire: Benoit, Monique

(56) Documents cités:
- EP-A- 0 211 961
- GB-A- 2 017 447
- NEC RESEARCH & DEVELOPMENT no. 88, Janvier 1988, TOKYO, JP pages 57 - 64 TAKANO ET AL: 'Monopulse SSR System'
- ALTA FREQUENZA vol. 52, no. 5, Septembre 1983, MILANO, IT pages 335 - 343 MARCHETTI ET AL. 'Reply processing in monopulse SSR system with improved degarbling capability'

## Description

La présente invention concerne un procédé et un dispositif de détection de mélanges d'impulsions reçues par un radar secondaire par analyse de phase. Elle s'applique notamment aux radars secondaires recevant des réponses impulsionnelles de plusieurs avions à la fois, et particulièrement quand les fréquences de fonctionnement de leurs transpondeurs sont très proches.

Le trafic aérien devenant de plus en plus dense, les impulsions émises par les transpondeurs des avions et destinées aux radars secondaires au sol entrent en confusion en créant des mélanges d'impulsions reçues encore appelés "garbling" selon la terminologie anglo-saxonne. Ces garblings induisent de faux codes au niveau des circuits de réception et de traitement des radars secondaires, ce qui ne permet pas d'identifier les avions ou leurs positions par exemple, entraînant par là même de graves conséquences pour la sécurité du trafic aérien.

La détection de présence d'une impulsion d'une réponse secondaire émise par un avion, est généralement réalisée au niveau d'un signal noté QΣ dont l'amplitude est la moitié de celle du signal reçu par la voie somme de l'antenne du radar secondaire. Le traitement du radar secondaire exploite uniquement ce type d'information, d'une part pour détecter une réponse, en particulier les deux impulsions connues et standardisées F1 et F2 séparées de 20,3 µs et encadrant la réponse, et d'autre part pour détecter le code de la réponse ayant la forme d'une succession d'impulsions. En conséquence, tout le traitement secondaire n'exploite que la présence d'une puissance haute fréquence contenue dans des impulsions de durée normalisée égale à 450 ns séparées entre elles par un espacement normalisé multiple de 1,45 µs. Chaque impulsion véhicule une information binaire, par conséquent, si sa puissance dépasse un certain seuil fonction des impulsions de référence F1 ou F2, cette information sera par exemple égale à 1, et égale à 0 dans le cas contraire. La puissance émise par les transpondeurs des avions est généralement, à la réception, transposée dans le domaine des fréquences dites intermédiaires, typiquement de l'ordre de 60 MHz, puis détectée à travers des amplificateurs limiteurs logarithmiques dont le but est notamment d'absorber la grande dynamique de puissance reçue et d'éviter par exemple la saturation des circuits de traitement.

En cas de "garbling" entre deux impulsions reçues par un radar secondaire, les méthodes d'analyse selon l'art antérieur, notamment les systèmes d'analyse de la puissance du signal QΣ, ne révèlent pas l'existence de deux impulsions mélangées lorsque la différence de puissance entre celles-ci est inférieure par exemple à 6 dB, c'est-à-dire que la puissance de l'une n'est pas au moins égale au double de l'autre; on effectue alors des erreurs de détection en durée et en position des deux impulsions mélangées. Il existe des solutions permettant de résoudre ces problèmes. En particulier, il est possible dans le cas où l'antenne de réception du radar secondaire est de type monopulse, d'exploiter des signaux de puissance et d'écartométrie issus des voies somme et différence. Le signal de puissance est par exemple l'expression logarithmique du signal issu de la voie somme, ce signal peut être noté Log Σ (t). Le signal d'écartométrie est le rapport du signal de la voie différence sur le signal de la voie somme, il peut être noté Δ/Σ (t). Ces solutions analysent la forme des signaux Log Σ (t) et Δ/Σ (t), ces signaux sont impulsionnels et sont synchrones des impulsions reçues. D'après ces solutions, en cas d'ondulations superposées aux signaux Log Σ (t) et Δ/Σ (t) et dépassant un certain seuil, il est déduit la présence de "garbling". Ces ondulations sont en fait dues aux écarts de fréquence de fonctionnement entre les différents transpondeurs émettant leurs réponses vers le radar secondaire. Or, si cet écart est trop faible, ces ondulations ne peuvent pas être détectées; typiquement cet écart doit être supérieur à environ 1 MHz. Cependant, les transpondeurs modernes numériques, basés sur des oscillateurs à quartz de précision inférieure à ± 10⁻⁵, fonctionnent avec des fréquences de plus en plus rapprochées ne permettant pas d'utiliser ces solutions. En effet, si les ondulations dues à un "garbling" sont à une fréquence de l'ordre de 20 kHz, ce qui peut être le cas avec ces transpondeurs modernes, les impulsions reçues durant 450 ns et la période des ondulations durant 50 µs, il sera impossible de détecter une quelconque variation de niveau ou d'écartométrie à l'intérieur de l'impulsion reçue. Le but de l'invention est de pallier les limitations précités, notamment en permettant la détection de "garbling" dus à des transpondeurs de fréquences de fonctionnement très proches.

A cet effet, l'invention a pour objet un procédé de détection de mélanges d'impulsions reçues par un radar secondaire à antenne de réception monopulse délivrant un signal somme fourni par sa voie somme et un signal différence fourni par sa voie différence, caractérisé en ce qu'il consiste à analyser l'écart de phase entre le signal somme et le signal différence, le mélange d'au moins deux impulsions reçues étant détecté par un écart de phase dont la valeur est sensiblement différente de 0 ou 180°, lorsque les signaux reçus n'ont pas leur azimut dans le voisinage de l'axe central de l'antenne.

L'invention a également pour objet un dispositif pour la mise en oeuvre du procédé précité.

L'invention a pour principaux avantages qu'elle est simple à mettre en oeuvre et qu'elle est économique.

D'autres caractéristiques et avantages de l'invention apparaîtront à l'aide de la description qui suit, faite en regard des dessins annexés qui représentent :
- la figure 1a, une impulsion standard reçue;
- la figure 1b, le mélange de deux impulsions reçues ;
- la figure 2, un cas où deux transpondeurs émettent des signaux de réponse vers un même radar;
- la figure 3, une courbe représentative de l'allure générale du déphasage entre les signaux issus des voies somme et différence de l'antenne de réception;
- la figure 4, un synoptique d'un mode de réalisation possible pour la mise en oeuvre du procédé selon l'invention.

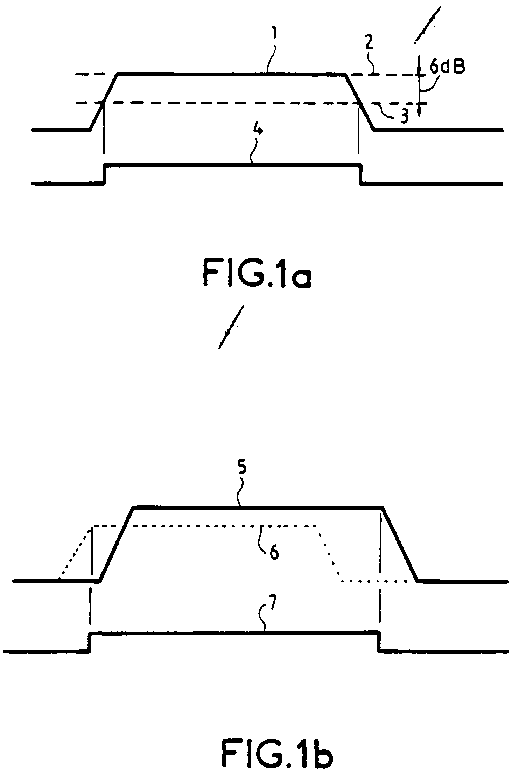

La figure 1a représente le niveau de puissance d'une impulsion standard 1 reçue par des circuits de réception, notamment par la voie somme de l'antenne monopulse, d'un radar secondaire. Des droites 2, 3 délimitent la moitié de la puissance contenue dans l'impulsion 1. Exprimé en données logarithmiques, le niveau de puissance défini par la droite inférieure 3 est diminué de 6 dB par rapport au niveau maximal de puissance défini par la droite supérieure 2. La courbe 4, notée généralement QΣ, est une détection de l'amplitude moitié de l'impulsion 1 reçue, c'est-à-dire de la puissance maximale diminuée de 6 dB.

La figure 1b présente un exemple de "garbling" où deux impulsions 5, 6 émises par exemple par deux avions différents, se mélangent pour donner un signal composite, à l'entrée des circuits de réception d'un radar secondaire. Si la différence de puissance entre les deux impulsions 5, 6 est inférieure à 6 dB par exemple, le signal 7 détectant la moitié de puissance des signaux reçus ne différencie pas ces deux impulsions 5, 6.

Les antennes de réception utilisées dans les radars secondaires sont généralement monopulses et contiennent donc une voie somme et une voie différence. La voie somme est essentiellement utilisée pour recevoir la puissance du signal émis par le transpondeur d'un avion et donc pour détecter la réponse et le code contenus dans ce signal. La voie différence est utilisée avec la voie somme pour former une tension, rapport du signal reçu par la voie différence sur le signal reçu par la voie somme, liée au dépointage de l'avion par rapport à l'axe de l'antenne du radar secondaire. Cette tension sert donc pour déterminer précisément l'azimut de la cible.

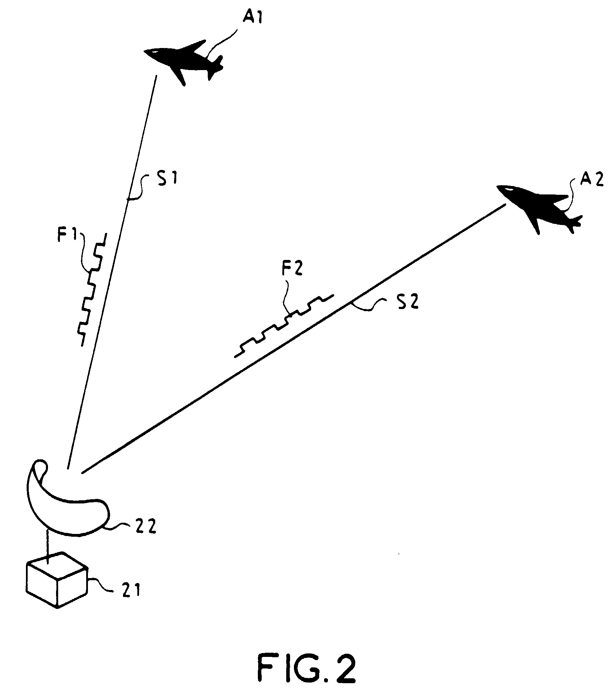

La figure 2 représente un cas où les transpondeurs de deux avions A1, A2 émettent des signaux de réponse S1, S2 vers l'antenne 22 d'un radar 21. L'avion A1 fournit par exemple le signal S1 de puissance P1, de fréquence F1 et de phase φ1, de même, l'avion A2 fournit le signal S2 de puissance P2, de fréquence F2 et de phase φ2.

Les fréquences F1, F2 sont comprises dans une bande centrée autour de la fréquence de 1090 MHz. Au niveau des circuits de réception du radar secondaire, ces fréquences sont transposées dans le domaine des fréquences dites intermédiaires, par exemple 60 MHz.

Par ailleurs, les signaux reçus par le radar secondaire génèrent un signal somme noté Σ dans la voie somme de l'antenne de réception 22 et un signal différence noté Δ dans sa voie différence.

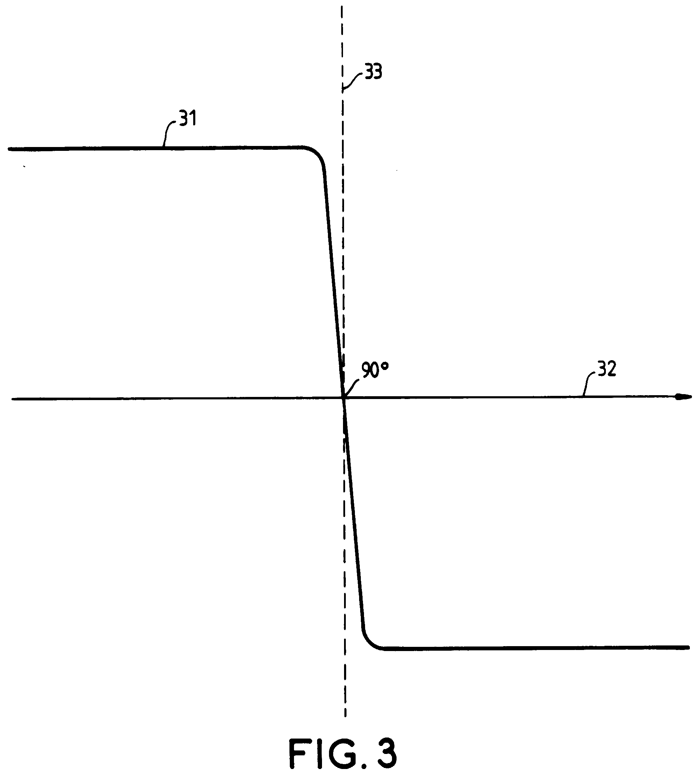

La figure 3 montre l'allure générale de la courbe représentative 31 du déphasage entre le signal somme Σ et le signal différence Δ en présence d'un seul signal reçu, l'axe 32 définissant l'azimut du signal reçu et l'axe 33 le déphasage précité. En dehors du voisinage d'un point 90° définissant la position de l'axe central de l'antenne, le déphasage entre le signal somme Σ et le signal différence Δ est constant, il vaut 0° ou 180°. Le voisinage précité autour de l'axe central de l'antenne est généralement défini par un angle de quelques dixièmes de degrés environ.

En cas de garbling, lorsque deux impulsions reçues sont mélangées, les calculs et les expériences effectués par la déposante ont montré que le déphasage du signal somme Σ par rapport au signal différence Δ n'est plus égal à 0° ou 180°, à condition que les deux signaux mélangés ne soient pas sensiblement en phase, ce dernier cas étant toutefois statistiquement rare. Ainsi, selon l'invention, un moyen de détection de la présence d'un garbling consiste à analyser les écarts de phase entre le signal somme Σ et le signal différence Δ. Si un écart est théoriquement différent de 0° ou 180,° il en résulte la présence de deux impulsions mélangées. Dans la réalité, en absence de garbling, l'écart n'est pas exactement égal à 0° ou 180°, donc un garbling sera détecté pour un écart sensiblement différent de 0° ou 180° Cependant, comme le montre la figure 3, l'écart de phase est mal défini autour du point 0°, c'est-à-dire pour des signaux dont l'azimut est situé dans l'axe central de l'antenne de réception où cet écart bascule de 0° à 180°. Cela empêche dans ce cas d'utiliser cet écart de phase pour détecter des garblings.

Selon l'invention, quand les signaux reçus ont un azimut situé au voisinage de l'axe central de l'antenne, un moyen de détecter la présence d'un garbling consiste alors à analyser les écarts de fréquence entre le signal somme Σ et le signal différence Δ. Dans ce dernier cas, le signal somme Σ a une puissance très nettement supérieure à celle du signal différence Δ. Il est donc possible, quand la différence de puissance entre le signal somme Σ et le signal différence Δ dépasse un certain seuil, égal à 15 dB par exemple, de décider du passage de l'analyse en phase à l'analyse en fréquence. Dans ce dernier cas, si une seule impulsion est reçue par le radar secondaire, l'écart de fréquence entre le signal somme Σ et le signal différence Δ reste sensiblement nul. En cas de réception de deux impulsions mélangées et de fréquence différente, il y a des variations de fréquences dans le signal somme Σ et dans le signal différence Δ, dues aux différences de fréquences des signaux reçus donc en conséquence, l'écart de fréquence des signaux somme Σ et différence Δ ne reste plus constant et sort de la fourchette précitée. Cette analyse fréquentielle n'est toutefois possible que si l'écart de fréquence entre les impulsions reçues n'est pas trop faible, inférieur à environ 1 MHz par exemple. En effet, plus cet écart devient faible, plus les moyens de détection actuels de la variation de l'écart de fréquence entre le signal somme Σ et le signal différence Δ deviennent inopérants d'où l'utilisation de l'analyse de phase quand cela est possible, c'est-à-dire en dehors du voisinage de l'axe central de l'antenne. Le procédé selon l'invention permet donc de détecter des garblings quand les impulsions reçues mélangées ont des azimuts situés en dehors du voisinage de l'axe central de l'antenne de réception du radar secondaire ou que leur écart de fréquences est suffisamment élevé, supérieur à 1 MHz par exemple. Seuls les mélanges de signaux situés dans ce voisinage et dont l'écart de fréquence est inférieur à un seuil donné, 1 MHz par exemple, ne sont pas détectables. Le voisinage précité étant généralement défini par un écart angulaire de quelques dixièmes de degré, l'efficacité du procédé selon l'invention s'avère très probante. Pour des raison d'économie, il est possible par exemple de ne conserver que l'analyse en phase, les résultats obtenus restant encore statistiquement satisfaisants.

Pour rendre le procédé selon l'invention relativement indépendant des puissances reçues, les signaux somme Σ et différence Δ peuvent être par exemple limités en puissance.

Eventuellement un seul signal, le signal somme Σ ou le signal différence Δ, suffit pour détecter la présence d'un garbling. En effet, en cas de garbling, il apparaît des variations de fréquence à l'intérieur du signal somme Σ et du signal différence Δ, cette variation est donc théoriquement suffisante pour la détection d'un garbling. Néanmoins, les transpondeurs ne sont pas toujours stables, notamment les transpondeurs à magnétrons, et sont eux-mêmes à l'origine de variations de fréquences à l'intérieur de leurs impulsions émises qui se retrouvent dans les signaux somme Σ et différence Δ. L'intérêt de la méthode précédente proposée par l'invention quant à l'analyse fréquentielle est qu'elle permet de s'affranchir des variations de fréquences causées par les transpondeurs puisqu'elle joue sur l'écart, donc la différence, entre la fréquence du signal somme s et la fréquence du signal différence Δ. Cet écart ou cette différence étant indépendant des variations de fréquences des transpondeurs.

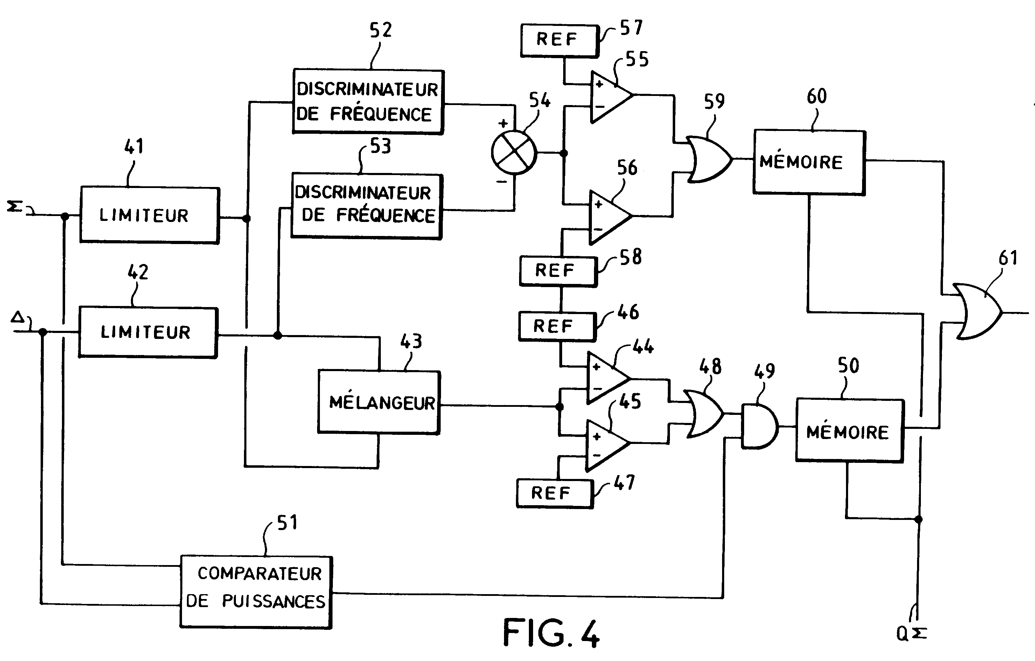

La figure 4 présente le synoptique d'un mode de réalisation possible pour la mise en oeuvre du procédé selon l'invention.

Après transposition en fréquence intermédiaire, le signal somme Σ attaque l'entrée d'un premier limiteur de puissance 41 et une entrée d'un comparateur de puissance 51 alors que le signal différence Δ attaque l'entrée d'un deuxième limiteur de puissance 42 et l'autre entrée du comparateur de puissance. Les signaux somme Σ et différence Δ sont par exemple transposés dans le domaine des fréquences intermédiaires. Les limiteurs de puissance 41, 42 rendent les circuits en aval indépendants des puissances mises en jeu. Seules les fréquences et les phases sont analysées. La sortie du premier limiteur 41 est reliée à une entrée d'un mélangeur 43 et la sortie du deuxième limiteur 42 est reliée à l'autre entrée du mélangeur 43. Le mélangeur 43 présente à sa sortie une tension pratiquement linéaire en fonction du déphasage entre ses signaux d'entrée, c'est-à-dire entre les signaux somme s et différence Δ. La sortie du mélangeur 43 est reliée à l'entrée négative d'un premier comparateur 44 et à l'entrée positive d'un deuxième comparateur 45. L'entrée positive du premier comparateur 44 est couplée à une première référence de tension 46 et l'entrée négative du deuxième comparateur 45 est couplée à une deuxième référence de tension 47. La première référence 46 sert par exemple à réaliser un seuil permettant de détecter que le déphasage à l'entrée du mélangeur 43 est sensiblement égal à 0°, la référence 46 délivrant par exemple une tension correspondant à un déphasage de 0° diminué de 10° ou 20° environ. De même, la deuxième référence 47 sert par exemple à réaliser un seuil permettant de détecter que le déphasage à l'entrée du mélangeur 43 est sensiblement égal à 180°, la référence 47 délivrant par exemple une tension correspondant à un déphasage de 180° augmenté de 10° ou 20° environ. Selon l'invention, en cas de garbling, le déphasage à l'entrée du mélangeur étant sensiblement différent de 0° ou 180°, cela se traduit au niveau du dispositif de la figure 4 par un passage à un niveau haut en sortie des comparateurs 44 et 45. Ces sorties sont donc reliées aux deux entrées d'une première porte logique "ou". Il est bien sûr possible d'inverser cette logique, c'est-à-dire choisir une configuration telle qu'un garbling se traduise par un niveau bas en sortie des comparateurs, la porte "ou" 48 étant alors remplacée par une porte "et". Les comparateurs 44, 45, les références de tension 46, 47 et la porte logique "ou" 48 constituent des premiers moyens de comparaison. D'autres circuits pourraient constituer ces premiers moyens de comparaison. La sortie de ces premiers moyens de comparaison, sortie de la porte "ou" dans l'exemple de réalisation de la figure 4, est reliée à une entrée d'une porte logique "et" 49, l'autre entrée de cette porte "et" 49 étant reliée à la sortie du comparateur de puissance 51. En effet, quand la puissance du signal somme Σ est nettement supérieure à celle du signal différence Δ, cela signifie que le signal reçu à un azimut situé dans le voisinage principal de l'antenne et donc que le déphasage entre les signaux somme Σ et différence Δ est indéfini comme le montre la figure 3, c'est-à-dire qu'il peut prendre une quelconque valeur entre -90° et +90°. Dans ces conditions, il est possible, par exemple, d'inhiber le résultat des premiers moyens de comparaison 44, 45, 46, 47, 48 par l'intermédiaire de la porte logique "et" 49 et du comparateur de puissance 51. En cas de puissance du signal somme Σ nettement supérieure à celle du signal différence Δ, la sortie du comparateur de puissance 51 passe par exemple à un niveau bas, ce qui inhibe la sortie de la porte logique "ou" 48. Le seuil de déclenchement du comparateur de puissance 51 peut par exemple être fixé à 15 dB environ. la sortie de la porte logique "et" 49, conditionnée par les résultats des premiers moyens de comparaison 44, 45, 46, 47, 48 et du comparateur de puissance 51, est reliée à l'entrée d'une première mémoire 50. Cette mémoire 50 est par exemple validée par le signal QΣ précité qui sert à détecter la présence d'impulsions reçues. A cet effet, le signal QΣ est par exemple relié à l'entrée de contrôle de la mémoire 50. La mémoire 50 sert par exemple à mémoriser l'apparition d'un niveau haut en sortie de la porte logique "49" signifiant la présence d'un garbling pendant l'impulsion.

Dans le dispositif de mise en oeuvre de l'invention de la figure 4, l'analyse de phase est complétée par une analyse de fréquence, dont le rôle principal est de détecter les garblings quand l'analyse de phase est inhibée par le comparateur de puissance 51. A cet effet, la sortie du premier limiteur de puissance 41 est reliée à l'entrée d'un premier discriminateur de fréquence 52 dont la sortie est reliée à l'entrée positive d'un circuit soustracteur 54. De même, la sortie du deuxième limiteur de puissance 42 est reliée à l'entrée d'un deuxième discriminateur de fréquence 53 dont la sortie est reliée à l'entrée négative du circuit soustracteur 54. Les sorties des discriminateurs de fréquence 52, 53 délivrent chacune une tension linéairement fonction de la fréquence de son signal d'entrée. Le circuit soustracteur 54 présente à sa sortie la différence entre ces tensions. En l'absence de garbling, cette différence reste sensiblement nulle. Pour détecter le passage de cette tension à l'extérieur de cette fourchette, c'est-à-dire la présence d'un garbling, la sortie du circuit soustracteur 54 est couplée à des deuxièmes moyens de comparaison. A cet effet, la sortie du circuit soustracteur 54 est reliée à l'entrée négative d'un troisième comparateur 55 et à l'entrée positive d'un quatrième comparateur 56. L'entrée positive du troisième comparateur 55 est couplée à une troisième référence de tension 57 et l'entrée négative du quatrième comparateur est couplée à une quatrième référence 58. Les références de tension 57, 58 servent par exemple à définir les seuils de la fourchette précitée, fonction de la tolérance au bruit et aux dérives thermiques des composants par exemple, le passage à l'extérieur de la fourchette, c'est-à-dire la présence d'un garbling, se traduisant par un niveau haut en sortie des comparateurs 55, 56. Le résultat des sorties des comparateurs 55, 56 sont regroupés en reliant ces sorties aux deux entrées d'une deuxième porte logique "ou" 59. La sortie de cette deuxième porte logique "ou" 59 est reliée à l'entrée d'une deuxième mémoire 60, comme la première mémoire 50, la deuxième mémoire 60 est validée par le signal QΣ pour ne fonctionner qu'en présence d'impulsions reçues. La deuxième mémoire 60 sert à mémoriser l'apparition de niveaux hauts en sortie de la deuxième porte "ou" 59, c'est-à-dire l'apparition de garbling pendant l'impulsion. La présence d'un niveau haut en sortie de la mémoire 50 ou de la mémoire 60, de façon non exclusive, indique la présence d'un garbling de l'impulsion. Les résultats en sorties de ces mémoires 50, 60 sont regroupés en reliant par exemple ces sorties aux deux entrées d'une troisième porte logique "ou" 61. Les deuxièmes moyens de détection 55, 56, 57, 58, 59 peuvent être réalisés par d'autres circuits que ceux présentés par la figure 4. L'utilisation des limiteurs de puissance 41, 42 est optionnelle, mais néanmoins recommandée pour éviter notamment une saturation des circuits en aval.

## Revendications

1. Procédé de détection de mélanges d'impulsions reçues par un radar secondaire à antenne de réception monopulse délivrant un signal somme (Σ) fourni par sa voie somme et un signal différence (Δ) fourni par sa voie différence, caractérisé en ce qu'il consiste à analyser l'écart de phase entre le signal somme (Σ) et le signal différence (Δ), le mélange d'au moins deux impulsions reçues étant détecté par un écart de phase dont la valeur est sensiblement différente de 0° ou de 180°, lorsque les signaux reçus n'ont pas leur azimut dans le voisinage de l'axe central de l'antenne.

2. Procédé selon la revendication 1, caractérisé en ce que le mélange d'au moins deux impulsions reçues est en outre détecté par un écart de fréquence sensiblement non constant entre le signal somme (Σ) et le signal différence (Δ).

3. Procédé selon l'une quelconque des revendications précédentes, caractérisé en ce qu'au moins un signal reçu ayant son azimut compris dans le voisinage de l'axe central de l'antenne de réception, le mélange d'au moins deux impulsions reçues est détecté par un écart de fréquence sensiblement non constant entre le signal somme (Σ) et le signal différence (Δ).

4. Procédé selon la revendication 3, caractérisé en ce que la réception d'au moins un signal ayant son azimut dans le voisinage de l'axe central de l'antenne est signalée par une différence de puissance entre le signal somme (Σ) et le signal différence (Δ) supérieur à un seuil donné.

5. Procédé selon l'une quelconque des revendications précédentes, caractérisé en ce que le signal somme (Σ) et le signal différence (Δ) sont limités en puissance avant la détection d'écart de phase.

6. Dispositif pour la mise en oeuvre du procédé selon l'une quelconque des revendications précédentes, caractérisé en ce qu'il comprend au moins:
- un premier limiteur de puissance (41) dont l'entrée est reliée au signal somme (Σ) et à une entrée d'un comparateur de puissance (51);
- un deuxième limiteur de puissance (42) dont l'entrée est reliée au signal différence (Δ) et à l'autre entrée du comparateur de puissance (51);
- un mélangeur (43) dont les entrées sont reliées aux sorties des limiteurs de puissance (41, 42) et la sortie à l'entrée de premiers moyens de comparaison (44, 45, 46, 47, 48);
- une porte logique "et" (49) dont une entrée est reliée à la sortie des premiers moyens de comparaison (44, 45, 46, 47, 48) et l'autre entrée à la sortie du comparateur de puissance (51);
- une mémoire (50) dont l'entrée est reliée à la sortie de la porte logique "et" (49) et l'entrée de contrôle est reliée à un signal de détection d'impulsions reçues (QΣ).

7. Dispositif selon la revendication 6, caractérisé en ce que les premiers moyens de comparaison sont constitués de deux comparateurs de tensions (44, 45), de deux références de tension (46, 47) et d'une porte logique "ou" (48), la sortie du mélangeur (43) étant reliée à l'entrée négative d'un premier comparateur (44) et à l'entrée positive d'un deuxième comparateur (45), l'entrée positive du premier comparateur (44) étant couplée à une première référence de tension (46) et l'entrée négative du deuxième comparateur (45) étant couplée à une deuxième référence (47), les sorties des comparateurs (44, 45) étant reliées aux deux entrées de la porte logique "ou" (49).

8. Dispositif selon l'une quelconque des revendications 6 ou 7, caractérisé en ce qu'il comprend en outre:
- un premier discriminateur de fréquence (52) dont l'entrée est reliée à la sortie du premier limiteur de puissance (41) et dont la sortie est reliée à l'entrée positive d'un circuit soustracteur (54) ;
- un deuxième discriminateur de fréquence (53) dont l'entrée est reliée à la sortie du deuxième limiteur de puissance (42) et dont la sortie est reliée à l'entrée négative du circuit soustracteur (54) ;
- des deuxièmes moyens de comparaison (55, 56, 57, 58, 59) dont l'entrée est reliée à la sortie du circuit soustracteur (54) et dont la sortie est reliée à l'entrée d'une deuxième mémoire (60), l'entrée de contrôle de la deuxième mémoire (60) étant reliée au circuit de détection d'impulsions reçues (QΣ);
- une porte logique "ou" (61) dont les entrées sont reliées aux sorties des mémoires (50, 60).

9. Dispositif selon la revendication 8, caractérisé en ce que les deuxièmes moyens de comparaison sont constitués de deux comparateurs de tensions (55, 56), de deux références de tension (57, 58) et d'une porte logique "ou" (59), la sortie du circuit soustracteur (54) étant reliée à l'entrée négative d'un troisième comparateur (55) et à l'entrée positive d'un quatrième comparateur (56), l'entrée positive du troisième comparateur étant couplée à une troisième référence (57) et l'entrée négative du quatrième comparateur (56) étant couplée à une quatrième référence (58), les sorties des comparateurs (55, 56) étant reliées aux deux entrées de la porte logique "ou" (59).

## Patentansprüche

1. Verfahren zum Erfassen von Gemischen von Impulsen, die von einem Sekundärradar mit Monopuls-Empfangsantenne empfangen werden, der ein Summensignal (Σ), daß auf seinem Summenkanal geliefert wird, sowie ein Differenzsignal (Δ), daß auf seinem Differenzkanal geliefert wird, ausgibt, dadurch gekennzeichnet, daß es darin besteht, den Phasenabstand zwischen dem Summensignal (Σ) und dem Differenzsignal (Δ) zu analysieren, wobei das Gemisch aus wenigstens zwei empfangenen Impulsen durch einen Phasenabstand erfaßt wird, dessen Wert im wesentlichen verschieden von 0° oder von 180° ist, wenn sich der Azimut der empfangenen Signale nicht in der Nähe der Mittelachse der Antenne befindet.

2. Verfahren nach Anspruch 1, dadurch gekennzeichnet, daß das Gemisch aus wenigstens zwei empfangenen Impulsen außerdem durch einen im wesentlichen nicht konstanten Frequenzabstand zwischen dem Summensignal (Σ) und dem Differenzsignal (Δ) erfaßt wird.

3. Verfahren nach irgendeinem der vorangehenden Ansprüchen, dadurch gekennzeichnet, daß dann, wenn der Azimut wenigstens eines empfangenen Signals in der Nähe der Mittelachse der Empfangsantenne liegt, daß Gemisch aus wenigstens zwei empfangenen Impulsen durch einen im wesentlichen nicht konstanten Frequenzabstand zwischen dem Summensignal (Σ) und dem Differenzsignal (Δ) erfaßt wird.

4. Verfahren nach Anspruch 3, dadurch gekennzeichnet, daß der Empfang wenigstens eines Signals, dessen Azimut in der Nähe der Mittelachse der Antenne liegt, durch eine Leistungsdifferenz zwischen dem Summensignal (Σ) und dem Differenzsignal (Δ) signalisiert wird, die größer als ein gegebener Schwellenwert ist.

5. Verfahren nach irgendeinem der vorangehenden Ansprüche, dadurch gekennzeichnet, daß das Summensignal (Σ) und das Differenzsignal (Δ) vor der Erfassung des Phasenabstands hinsichtlich ihrer Leistung begrenzt werden.

6. Vorrichtung für die Ausführung des Verfahrens nach irgendeinem der vorangehenden Ansprüche, dadurch gekennzeichnet, daß sie wenigstens enthält:
- einen ersten Leistungsbegrenzer (41), dessen Eingang mit dem Summensignal (Σ) und mit einem Eingang eines Leistungskomparators (51) verbunden ist;
- einen zweiten Leistungsbegrenzer (42), dessen Eingang mit dem Differenzsignal (Δ) und mit dem anderen Eingang des Leistungskomparators (51) verbunden ist;
- einen Mischer (43), dessen Eingänge mit den Ausgängen der Leistungsbegrenzer (41,42) verbunden sind und dessen Ausgang mit dem Eingang von ersten Vergleichsmitteln (44, 45, 46, 47, 48) verbunden ist;
- ein "UND"-Logikgatter (49), wovon ein Eingang mit dem Ausgang der ersten Vergleichsmittel (44, 45, 46, 47, 48) und der andere Eingang mit dem Ausgang des Leistungskomparators (51) verbunden ist;
- einen Speicher (50), dessen Eingang mit dem Ausgang des "UND"-Logikgatters (49) verbunden ist und dessen Steuereingang mit einem Erfassungssignal für empfangene Impulse (QΣ) verbunden ist.

7. Vorrichtung nach Anspruch 6, dadurch gekennzeichnet, daß die ersten Vergleichsmittel durch zwei Spannungskomparatoren (44, 45), aus zwei Referenzspannungen (46, 47) und aus einem "ODER"-Logikgatter gebildet sind, wobei der Ausgang des Mischers (43) mit dem negativen Eingang eines ersten Komparators (44) und mit dem positiven Eingang eines zweiten Komparators (45) verbunden ist, wobei der positive Eingang des ersten Komparators (44) an eine erste Referenzspannung (46) angeschlossen ist und der negative Eingang des zweiten Komparators (45) an eine zweite Referenz (47) angeschlossen ist, wobei die Ausgänge der Komparatoren (44, 45) mit den zwei Eingängen des "ODER"-Logikgatters verbunden sind.

8. Vorrichtung nach irgendeinem der Ansprüche 6 oder 7, dadurch gekennzeichnet, daß sie außerdem enthält:
- einen ersten Frequenzdiskriminator (52), dessen Eingang mit dem Ausgang des ersten Leistungsbegrenzers (41) verbunden ist und dessen Ausgang mit dem positiven Eingang einer Subtraktionsschaltung (54) verbunden ist;
- einen zweiten Frequenzdiskriminator (53), dessen Eingang mit dem Ausgang des zweiten Leistungsbegrenzers (42) verbunden ist und dessen Ausgang mit dem negativen Eingang der Subtraktionsschaltung (54) verbunden ist;
- zweite Vergleichsmittel (55, 56, 57, 58, 59), deren Eingang mit dem Ausgang der Subtraktionsschaltung (54) verbunden ist und deren Ausgang mit dem Eingang eines zweiten Speichers (60) verbunden ist, wobei der Steuereingang des zweiten Speichers (60) mit der Erfassungsschaltung für empfangene Impulse (QΣ) verbunden ist;
- ein "ODER"-Logikgatter (61), dessen Eingänge mit den Ausgängen der Speicher (50, 60) verbunden sind.

9. Vorrichtung nach Anspruch 8, dadurch gekennzeichnet, daß die zweiten Vergleichsmittel aus zwei Spannungskomparatoren (55, 56), aus zwei Referenzspannungen (57, 58) und aus einem "ODER"-Logikgatter (59) gebildet sind, wobei der Ausgang der Subtraktionsschaltung (54) mit dem negativen Eingang eines dritten Komparators (55) und mit dem positiven Eingang eines vierten Komparators (56) verbunden ist, wobei der positive Eingang des dritten Komparators an eine dritte Referenz (57) angeschlossen ist und der negative Eingang des vierten Komparators (56) an eine vierte Referenz (58) angeschlossen ist, wobei die Ausgänge der Komparatoren (55, 56) mit den zwei Eingängen des "ODER"-Logikgatters (59) verbunden sind.

## Claims

1. Method of detecting mixing of pulses received by a secondary radar with a monopulse receiving antenna delivering a sum signal (Σ) supplied by its sum channel and a difference signal (Δ) supplied by its difference channel, characterized in that it consists in analysing the phase difference between the sum signal (Σ) and the difference signal (Δ), the mixing of at least two received pulses being detected via a phase difference the value of which differs substantially from 0° or from 180°, when the received signals do not have their azimuth in the vicinity of the central axis of the antenna.

2. Method according to Claim 1, characterized in that the mixing of at least two received pulses is detected moreover by a substantially non-constant frequency difference between the sum signal (Σ) and the difference signal (Δ).

3. Method according to any one of the preceding claims, characterized in that with at least one received signal having its azimuth lying in the vicinity of the central axis of the receiving antenna, the mixing of at least two received pulses is detected by a substantially non-constant frequency difference between the sum signal (Σ) and the difference signal (Δ).

4. Method according to Claim 3, characterized in that the reception of at least one signal having its azimuth in the vicinity of the central axis of the antenna is signalled by a power difference between the sum signal (Σ) and the difference signal (Δ) greater than a given threshold.

5. Method according to any one of the preceding claims, characterized in that the sum signal (Σ) and the difference signal (Δ) are limited in power, before phase difference detection.

6. Device for implementing the method according to any one of the preceding claims, characterized in that it comprises at least:
- a first power limiter (41) the input of which is linked to the sum signal (Σ) and to an input of a power comparator (51);
- a second power limiter (42) the input of which is linked to the difference signal (Δ) and to the other input of the power comparator (51);
- a mixer (43) the inputs of which are linked to the outputs of the power limiters (41, 42) and the output to the input of the first comparison means (44, 45, 46, 47, 48);
- a logic "and" gate (49), one input of which is linked to the output of the first comparison means (44, 45, 46, 47, 48) and the other input to the output of the power comparator (51);
- a memory (50) the input of which is linked to the output of the logic "and" gate (49) and the control input is linked to a received pulse detection signal (QΣ).

7. Device according to Claim 6, characterized in that the first comparison means consist of two voltage comparators (44, 45), of two voltage references (46, 47) and of a logic "or" gate (48) the output of the mixer (43) being linked to the negative input of a first comparator (44) and to the positive input of a second comparator (45), the positive input of the first comparator (44) being coupled to a first voltage reference (46), and the negative input of the second comparator (45) being coupled to a second reference (47), the outputs of the comparators (44, 45) being linked to the two inputs of the logic "or" gate (49).

8. Device according to either of Claims 6 and 7, characterized in that it further comprises:
- a first frequency discriminator (52) the input of which is linked to the output of the first power limiter (41) and the output of which is linked to the positive input of a subtractor circuit (54);
- a second frequency discriminator (53) the input of which is linked to the output of the second power limiter (42) and the output of which is linked to the negative input of the subtractor circuit (54);
- second comparison means (55, 56, 57, 58, 59) the input of which is linked to the output of the subtractor circuit (54) and the output of which is linked to the input of a second memory (60) the control input of the second memory (60) being linked to the received pulse detection circuit (QΣ);
- a logic "or" gate (61) the inputs of which are linked to the outputs of the memories (50, 60).

9. Device according to Claim 8, characterized in that the second comparison means consist of two voltage comparators (55, 56), of two voltage references (57, 58) and of a logic "or" gate (59), the output of the subtractor circuit (54) being linked to the negative input of a third comparator (55) and to the positive input of a fourth comparator (56), the positive input of the third comparator being coupled to a third reference (57) and the negative input of the fourth comparator (56) being coupled to a fourth reference (58), the outputs of the comparators (55, 56) being linked to the two inputs of the logic "or" gate (59).
